# EUROPÄISCHE PATENTANMELDUNG

(11) **EP 1 172 592 A2**
(43) Veröffentlichungstag der Anmeldung: **16.01.2002**
(21) Anmeldenummer: 01115302.0
(22) Anmeldetag: 25.06.2001
(51) Int. Cl.: F16K 31/06

(54) **Magnetventil**

(30) Priorität: 13.07.2000 DE 10034033
(71) Anmelder: Nass Magnet GmbH, 30179 Hannover (DE)
(72) Erfinder: Rieck, Frank, 31303 Burgdorf (DE); Bast, Robert, 30890 Barsinghausen (DE); Fritz, Carsten, 25712 Burg (DE); Wagner, Holger, 30457 Hannover (DE); Hiddessen, Ralf, 31275 Lehrte (DE); Ossenbrügge, Jan-Peter, 30853 Langenhagen (DE)
(74) Vertreter: Tetzner, Michael, Dipl.-Ing.

(57) **Zusammenfassung**

Die Erfindung betrifft ein Magnetventil mit einem Ventilgehäuse (1), einem Elektromagnet, der eine Spule (2), ein Joch sowie einen Klappanker (4) aufweist, wenigstens einem ersten Ventilsitz (5) sowie ein durch den Klappanker betätigbares und mit dem ersten Ventilsitz zusammenwirkendes Dichtungselement (6). Das Joch weist Jochstifte (3.1,3.2) auf und der Klappanker ist an seinem vom Dichtungselement entfernten Ende an einem Jochstift gelagert.

## Beschreibung

Die Erfindung betrifft ein Magnetventil mit einem Klappanker gemäß dem Oberbegriff des Anspruchs 1.

Magnetventile werden für Steuerungen aller Art eingesetzt. Sie bestehen üblicherweise aus einem Ventilgehäuse, einem Elektromagnet, der eine Spule, ein Joch sowie einen Anker aufweist, wenigstens einen Ventilsitz sowie ein durch den Anker betätigbares und mit dem Ventilsitz zusammenwirkendes Dichtungselement. Bei der Ausgestaltung des Elektromagneten, insbesondere im Hinblick auf den Anker, unterscheidet man insbesondere zwischen dem Tauchanker- und dem Klappankerprinzip.

Um einen sicheren Betrieb von Magnetventilen bei möglichst geringer Leistungsaufnahme gewährleisten zu können, müssen bei der Fertigung der einzelnen Teile und beim Zusammenbau des Magnetventils enge Toleranzen eingehalten bzw. ausgeglichen werden.

Hinzu kommt der Wunsch in der Pneumatik, die Ventile immer kleiner werden zu lassen. Bei kleinen Magnetventilen ergibt sich, selbst bei sehr engen Toleranzen, daß durch die Summe der Einzeltoleranzen eine sichere Funktion, bei kleinen Leistungen und kleinen Hüben, nicht immer gewährleistet werden kann.

Der Erfindung liegt daher die Aufgabe zugrunde, das Magnetventil gemäß dem Oberbegriff des Anspruches 1 dahingehend weiterzuentwickeln, daß insbesondere auch bei kleinen Magnetventilen eine sichere Funktion gewährleistet werden kann.

Erfindungsgemäß wird diese Aufgabe durch die Merkmale des Anspruches 1 gelöst. Weitere Ausgestaltungen der Erfindung sind Gegenstand der Unteransprüche.

Das erfindungsgemäße Magnetventil besteht im wesentlichen aus folgenden Bestandteilen: einem Ventilgehäuse, einem Elektromagnet mit einer Spule, einem Joch sowie einem Klappanker, wenigstens einem ersten Ventilsitz sowie einem durch den Klappanker betätigbaren und mit dem ersten Ventilsitz zusammenwirkenden Dichtungselement. Das Joch weist Jochstifte auf und der Anker ist an seinem von dem Dichtungselement entfernten Ende an einem Jochstift gelagert.

Indem der Klappanker unmittelbar am Jochstift gelagert ist, kann auf eine zusätzliche Lagerung, die weitere Toleranzen verursacht, verzichtet werden.

Indem der Klappanker im Bereich seiner Lagerung in permanentem Kontakt mit dem Jochstift steht, kann der magnetische Übergangswiderstand zudem gering gehalten werden.

Durch eine geeignete, beispielsweise schalenartige Lagerung des Klappankers am Jochstift kann der Anker seine Position außerdem nicht translatorisch verändern. Außerdem gewährleistet der direkte magnetische Fluß über die Jochstifte und den Anker eine baulich sehr kompakte Einheit.

Um eine Schädigung der Spule durch das Fluid zu vermeiden, wird üblicherweise die Spule vom Fluidbereich getrennt, wie das beispielsweise auch in der EP-A-0 872 675 der Fall ist. Die Trennung erfolgt dabei zwischen Spule und Ventilgehäuse, so daß eine Verbindung der beiden Bauteile mit Abdichtung notwendig ist. Dies hat jedoch den Nachteil, daß die hierdurch auftretenden Toleranzen ausgeglichen werden müssen. Üblicherweise wird die Spule durch Dichtungen vom Fluidbereich getrennt, wobei Spule und Ventilgehäuse ggf. als separate Bauteile ausgebildet werden.

In einem bevorzugten Ausführungsbeispiel der vorliegenden Erfindung ist das Ventilgehäuse einstückig ausgebildet und bildet gleichzeitig den Spulenkörper, so daß die Spule direkt auf das Ventilgehäuse gewickelt wird.

Der Klappanker befindet sich demnach direkt im Fluidbereich. Die Jochstifte weisen beidseitig jeweils einen umlaufenden Ansatz (Tannenbaumprofil) auf, der sich beim Eindrücken der Jochstifte abdichtend in das Ventilgehäuse eindrückt. Durch eine geeignete Preßpassung zwischen den Jochstiften und dem Ventilgehäuse wird der Innenraum mit dem Klappanker zuverlässig abgedichtet, ohne daß separate Dichtungen erforderlich sind.

Indem bei diesem Ausführungsbeispiel keine Trennung zwischen Spule und Ventilgehäuse vorgesehen ist, treten an dieser Stelle auch keine zusätzlichen Toleranzen auf.

In einer weiteren Ausgestaltung der Erfindung ragt der Klappanker mit seinem mit dem Dichtungselement zusammenwirkenden Ende über den zweiten Jochstift heraus. Durch einen derartigen Aufbau ergibt sich am Ventilsitz ein größerer Arbeitshub als der Hub am Arbeitsluftspalt im magnetischen Kreis. Dadurch vergrößert sich auch die zur Verfügung stehende Kraft am Ventilsitz gegenüber einem herkömmlichen Aufbau, insbesondere bei Verwendung des Tauchankerprinzips, bei dem der Hub am Arbeitsluftspalt im magnetischen Kreis dem Hub am Ventilsitz entspricht. Die größere Kraft bei einem kleineren Hub im magnetischen Kreis ergibt sich durch den Anstieg der Kraftkurve mit abnehmendem Abstand, wodurch die mittlere Kraft gegenüber der Tauchankerlösung größer wird.

Weitere Vorteile und Ausgestaltungen der Erfindung werden im folgenden anhand der Beschreibung eines Ausführungsbeispieles und der Zeichnung näher erläutert.

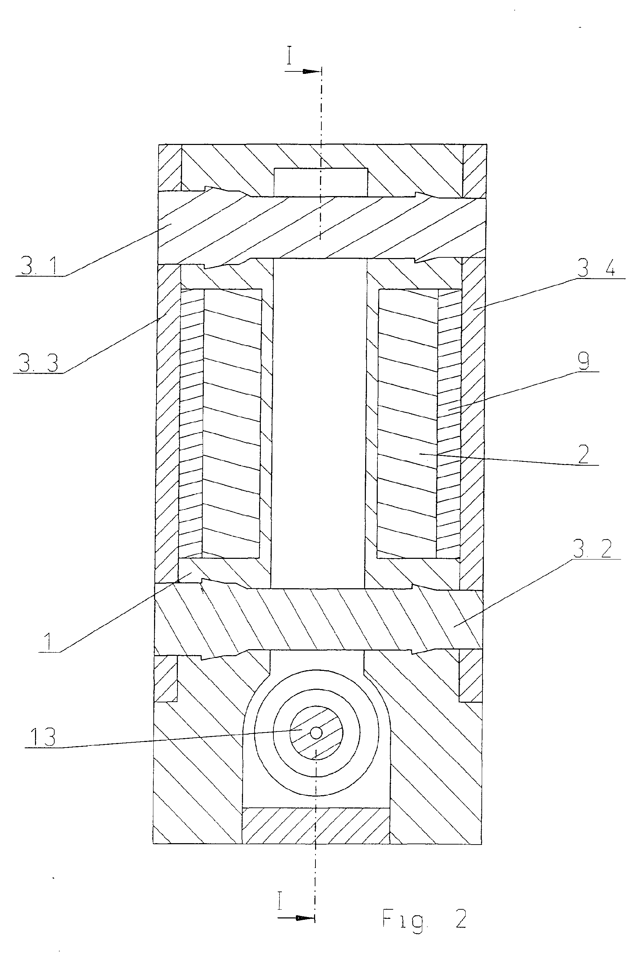

In der Zeichnung zeigen
- Fig.1: eine Längsschnittdarstellung des Magnetventils gemäß der Linie I-I der Fig.2;
- Fig.2: eine Längsschnittdarstellung des Magnetventils entlang der Linie II-II der Fig.1 und

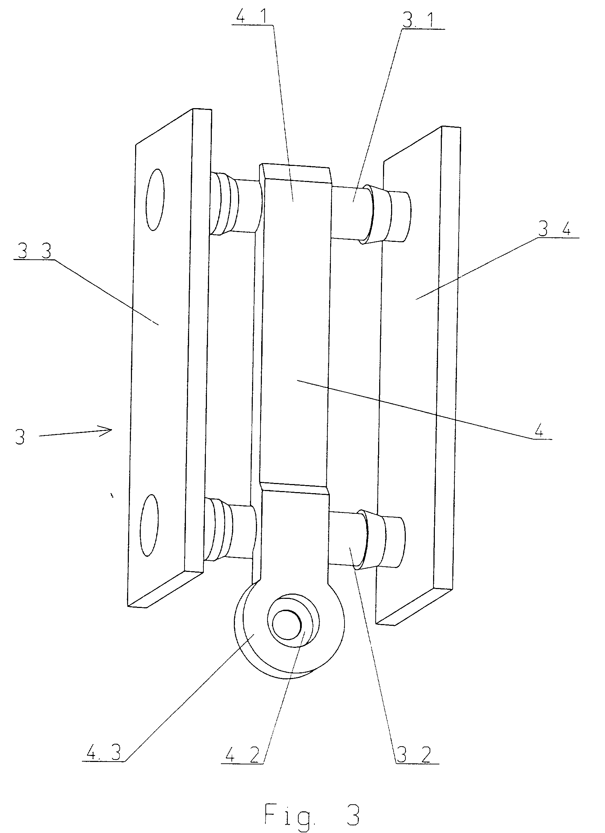

- Fig.3: eine dreidimensionale Darstellung von Joch und Klappanker.

Das in der Zeichnung in verschiedenen Ansichten dargestellte Magnetventil besteht im wesentlichen aus einem Ventilgehäuse 1, einem Elektromagneten, der eine Spule 2, ein Joch 3 sowie einen Klappanker 4 aufweist, wenigstens einem ersten Ventilsitz 5 sowie einem durch den Klappanker betätigbaren und mit dem ersten Ventilsitz zusammenwirkenden Dichtungselement 6.

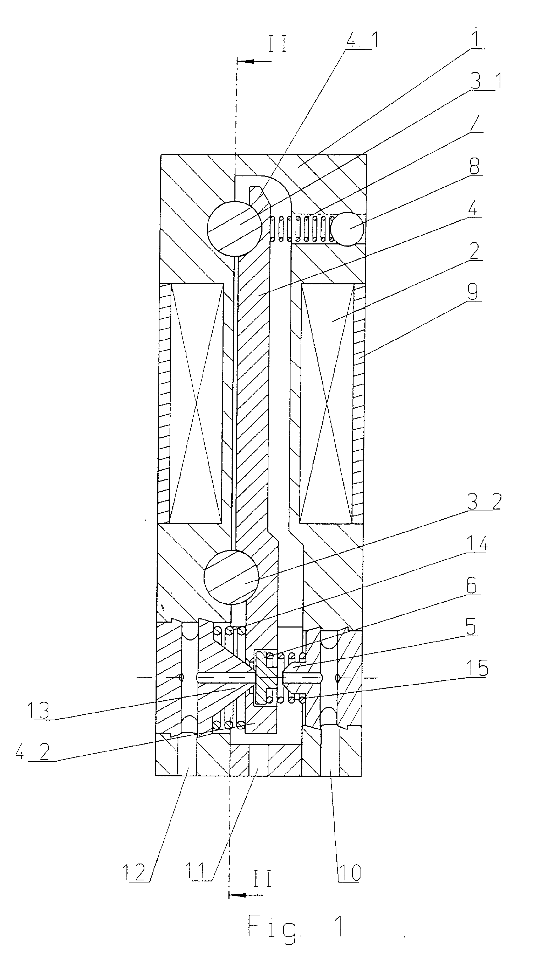

Das Joch 3 weist Jochstift 3.1, 3.2 auf, wobei die Jochstifte über Jochplatten 3.3 und 3.4 miteinander verbunden sind. Der Klappanker 4 ist durch die Spule 2 hindurchgeführt und an seinem vom Dichtungselement 6 entfernten Ende 4.1 am Jochstift 3.1 gelagert. Der Klappanker 4 ist im Bereich seiner Lagerung am Jochstift schalenartig ausgebildet, wie das insbesondere aus Fig.1 zu ersehen ist. Eine Feder 7 drückt das Ende 4.1 des Klappankers 4 permanent auf den Jochstift 3.1, so daß der magnetische Übergangswiderstand gering gehalten wird.

Die Feder 7 stützt sich dabei auf einer ins Ventilgehäuse 1 eingedrückten Kugel 8 ab.

Das Ventilgehäuse 1 ist vorzugsweise einstückig ausgebildet. In dem dargestellten Ausführungsbeispiel ist außerdem die Spule 2 direkt auf das Ventilgehäuse gewickelt. Sie ist außen von einer Schutzhülle 9 umgeben.

Der Klappanker 4 ist im dargestellten Ausführungsbeispiel als flaches, im Bereich des Jochstiftes 3.2 leicht gekröpftes Element ausgebildet.

Beim dargestellten Ausführungsbeispiel handelt es sich um ein 3/2-Wege-Magnetventil mit einem Druckanschluß 10, einem Arbeitsanschluß 11 und einem Entlüftungsanschluß 12. Ferner ist neben dem ersten Ventilsitz 5 ein zweiter Ventilsitz 13 vorgesehen, wobei das Dichtungselement 6 zwischen den beiden Ventilsitzen in einer Ausnehmung 4.2 des Klappankers 4 angeordnet ist. Der Arbeitsanschluß 11 steht je nach Stellung des Dichtungselements 6 über den ersten Ventilsitz 5 mit dem Druckanschluß 10 bzw. über den zweiten Ventilsitz 13 mit dem Entlüftungsanschluß 12 in Verbindung.

Im Bereich des der Lagerung gegenüberliegenden Endes 4.3 des Klappankers 4 ist ein erstes Federelement 14 vorgesehen, das über das Ende 4.2 des Klappankers auf das Dichtungselement 6 im Sinne eines Schließens des ersten Ventilsitzes 5 durch das Dichtungselement 6 einwirkt. In der nicht gezeigten Schließstellung des ersten Ventilsitzes 5 ist der Klappanker 4 vom Jochstift 3.2 abgehoben. Ferner ist ein zweites Federelement 15 vorgesehen, das auf das Dichtungselement 6 im Sinne eines Abhebens des Dichtungselements vom ersten Ventilsitz 5 und somit entgegen dem ersten Federelement 14 wirkt.

Das erste Federelement 14 ist jedoch stärker ausgebildet als das zweite Federelement 15, so daß bei Nichterregung des Elektromagneten das Dichtungselement 6 aufgrund der größeren Wirkung des ersten Federelements 14 mit dem ersten Ventilsitz 5 in Schließkontakt bleibt. In dieser Stellung bildet sich zwischen dem Klappanker 4 und dem Jochstift 3.2 ein Arbeitsluftspalt.

Bei Erregung des Elektromagneten, d.h. nach dem Anlegen einer Spannung an die Spule 2, wird der Klappanker 4 an den Jochstift 3.2 herangezogen und hebt dabei die Wirkung des ersten Federelements 14 auf das Dichtungselement 6 auf. Das Dichtungselement 6 wird dann durch das zweite Federelement 15 vom ersten Ventilsitz 5 abgehoben und gegen den zweiten Ventilsitz 13 gedrückt. Sobald der Elektromagnet nicht mehr erregt wird, klappt der Klappanker 4 vom Jochstift 3.2 durch die Wirkung des ersten Federelements 14 weg, so daß das Dichtungselement vom zweiten Ventilsitz 13 abgehoben und in Schließkontakt mit dem ersten Ventilsitz 5 gebracht wird.

Wenngleich für die Bewegung des Dichtungselements 6 zwischen den beiden Ventilsitzen 5, 13 das zweite Federelement 15 nicht unbedingt erforderlich ist, so ergibt sich doch folgender Vorteil:

Wäre das zweite Federelement 15 nicht vorhanden, müßte das Dichtungselement 6 am Klappanker befestigt werden und würde allein durch den Klappanker auf dem zweiten Ventilsitz 13 gehalten werden. In dieser Stellung wäre jedoch zwangsläufig der Arbeitsluftspalt am kleinsten und damit die Kraft des Klappankers im Bereich des Dichtungselementes am größten. Dies würde bedeuten, daß das Ventil äußerst präzise justiert werden müßte, um entweder Undichtigkeiten oder einen zu großen Druck des Dichtelements auf den zweiten Ventilsitz zu vermeiden. Im dargestellten Ausführungsbeispiel wird die Schließkraft des Dichtungselements am zweiten Ventilsitz 13 ausschließlich durch die Kraft des zweiten Federelements 15 bewirkt, da der Klappanker 4, nachdem das Dichtungselement 6 in Schließkontakt mit dem zweiten Ventilsitz 13 gekommen ist, noch etwas weiter "einklappt". Das Dichtungselement 6 ist zu diesem Zweck daher auch nur lose in der Ausnehmung 4.2 des Klappankers 4 angeordnet.

Mit einer derartigen Anordnung wird das Dichtungselement sowohl in der Schließstellung mit dem ersten Ventilsitz als auch in der Schließstellung mit dem zweiten Ventilsitz durch Federkraft gehalten. Auf diese Weise wird eine sehr zuverlässige Funktionsweise gewährleistet, ohne daß zu enge Toleranzen eingehalten werden müssen.

Das oben beschriebene Magnetventil eignet sich daher in besonderem Maße auch für sehr kleine Ventile.

Um gerade bei sehr kleinen Magnetventilen mit möglichst geringer Leistung schalten zu können, ist die Einhaltung von engen Toleranzen erforderlich. Um die Fertigung und dem Zusammenbau diesbezüglich zu erleichtern, werden nicht nur die Jochstifte, sondern auch die beiden Ventilsitze in das Ventilgehäuse eingedrückt, wobei die relative Lage der Ventilsitze zueinander und zum Klappanker durch das Eindrücken der Ventilsitze einstellbar ist. Die Ventilsitze weisen zu diesem Zweck einen äußeren umlaufenden Ansatz auf, der sich beim Eindrücken des Ventilsitzes abdichtend in das Ventilgehäuse eindrückt. Auf diese Weise erhält man ein äußerst kompaktes Magnetventil, das auf zusätzliche Dichtungen verzichten kann.

## Patentansprüche

1. Magnetventil mit
- einem Ventilgehäuse (1),
- einem Elektromagnet, der
- eine Spule (2),
- ein Joch (3)
- sowie einen Klappanker (4) aufweist,
- wenigstens einem ersten Ventilsitz (5)
- sowie ein durch den Klappanker betätigbares und mit dem ersten Ventilsitz zusammenwirkendes Dichtungselement (6),
**dadurch gekennzeichnet, daß** das Joch Jochstifte (3.1, 3.2) aufweist und der Klappanker (4) an seinem vom Dichtungselement entfernten Ende (4.1) an einem Jochstift (3.1) gelagert ist.

2. Magnetventil nach Anspruch 1, **dadurch gekennzeichnet, daß** das Ventilgehäuse (1) einstückig ausgebildet ist.

3. Magnetventil nach Anspruch 1, **dadurch gekennzeichnet, daß** die Spule (2) direkt auf das Ventilgehäuse gewickelt ist.

4. Magnetventil nach Anspruch 1, **dadurch gekennzeichnet, daß** der Klappanker (4) durch die Spule (2) hindurchgeführt ist.

5. Magnetventil nach Anspruch 1, **dadurch gekennzeichnet, daß** der Klappanker (4) im Fluidbereich angeordnet ist.

6. Magnetventil nach Anspruch 1, **dadurch gekennzeichnet, daß** der Klappanker (4) im Bereich seiner Lagerung am Jochstift (3.1) schalenartig ausgebildet ist.

7. Magnetventil nach Anspruch 1, **dadurch gekennzeichnet, daß** der Klappanker (4) mittels einer Feder (7) auf den Jochstift (3.1) gedrückt wird.

8. Magnetventil nach Anspruch 1, **dadurch gekennzeichnet, daß** der erste Ventilsitz (5) in das Ventilgehäuse (1) eingedrückt ist und zum Ausgleich von Fertigungstoleranzen der erste Ventilsitz in seiner relativen Lage zum Klappanker durch das Eindrücken des Ventilsitzes einstellbar ist.

9. Magnetventil nach Anspruch 1, **dadurch gekennzeichnet, daß** ein erstes Federelement (14) vorgesehen ist, das auf das Dichtungselement (6) im Sinne eines Schließens des ersten Ventilsitzes (5) durch das Dichtungselement einwirkt.

10. Magnetventil nach Anspruch 1, **dadurch gekennzeichnet, daß** ein zweites Federelement (15) vorgesehen ist, das auf das mit dem Klappanker (4) zusammenwirkende Dichtungselement (6) im Sinne eines Abhebens des Dichtungselements vom ersten Ventilsitz (5) wirkt.

11. Magnetventil nach Anspruch 1, **dadurch gekennzeichnet, daß** ein erstes Federelement (14) vorgesehen ist, das auf das Dichtungselement (6) im Sinne eines Schließens des ersten Ventilsitzes (5) durch das Dichtungselement wirkt, wobei das erste Federelement (14) sowie der Elektromagnet derart zusammenwirken, daß bei Erregung des Elektromagneten das Dichtungselement (6) vom ersten Ventilsitz (5) abgehoben wird und bei Nichterregung des Elektromagneten das Dichtungselement durch die Kraft des ersten Federelements (14) mit dem ersten Ventilsitz (5) in Schließkontakt kommt.

12. Magnetventil nach einem oder mehreren der vorhergehenden Ansprüche, **dadurch gekennzeichnet, daß** ein zweiter Ventilsitz (13) vorgesehen ist, der mit einem durch den Klappanker (4) betätigbaren Dichtungselement (6) zusammenwirkt.

13. Magnetventil nach einem oder mehreren der vorhergehenden Ansprüche, **dadurch gekennzeichnet, daß** zwei in das Ventilgehäuse (1) eingedrückte Ventilsitze (5, 13) vorgesehen sind, wobei das durch den Klappanker betätigbare Dichtungselement (6) zwischen den beiden Ventilsitzen angeordnet ist und wobei die relative Lage der Ventilsitze zueinander und zum Klappanker durch das Eindrücken der Ventilsitze einstellbar ist.

14. Magnetventil nach Anspruch 1, **dadurch gekennzeichnet, daß**
- ein erstes Federelement (14) vorgesehen ist, das auf das Dichtungselement (6) im Sinne eines Schließens des ersten Ventilsitzes (5) durch das Dichtungselement wirkt,
- das erste Federelement (14) sowie der Elektromagnet derart zusammenwirken, daß bei Erregung des Elektromagneten das Dichtungselement (6) vom ersten Ventilsitz (5) abgehoben wird und bei Nichterregung des Elektromagneten das Dichtungselement durch die Kraft des ersten Federelements (14) mit dem ersten Ventilsitz (5) in Schließkontakt kommt,
- ein zweiter Ventilsitz (13) vorgesehen ist, der mit einem durch den Klappanker (4) betätigbaren Dichtungselement (6) zusammenwirkt und
- das erste und zweite Federelement (14, 15) sowie der Elektromagnet derart zusammenwirken, daß bei Erregung des Elektromagneten die Kraft des ersten Federelements (14) durch den Klappanker (4) aufgehoben und das Dichtungselement (6) durch die Kraft des zweiten Federelements (15) in Schließkontakt mit dem zweiten Ventilsitz (13) gebracht wird und bei Nichterregung des Elektromagneten das Dichtungselement (6) durch die Kraft des ersten Federelements (14) mit dem ersten Ventilsitz (5) in Schließkontakt kommt.
